# EUROPÄISCHE PATENTSCHRIFT

(11) **EP 3 507 043 B1**
(45) Veröffentlichungstag und Bekanntmachung des Hinweises auf die Patenterteilung: **01.03.2023**
(21) Anmeldenummer: 17828642.3
(22) Anmeldetag: 30.08.2017
(51) Int. Cl.: B23C 5/04, B23C 3/34, C23C 4/02, B23P 9/00, B23B 41/12

(54) **AUFRAUWERKZEUG UND VERFAHREN ZUM AUFRAUEN EINER ZYLINDRISCHEN OBERFLÄCHE**
ROUGHENING TOOL AND METHOD FOR ROUGHENING A CYLINDRICAL SURFACE
OUTIL DE RUGOSIFICATION ET PROCÉDÉ DE RUGOSIFICATION D'UNE SURFACE CYLINDRIQUE

(30) Priorität: 31.08.2016 DE 102016216464
(43) Veröffentlichungstag der Anmeldung: 10.07.2019
(73) Patentinhaber: Gühring KG, 72458 Albstadt (DE)
(72) Erfinder: TEUSCH, Bruno, 73733 Esslingen (DE)
(74) Vertreter: Winter, Brandl - Partnerschaft mbB
(86) Internationale Anmeldenummer: PCT/DE2017/000278
(87) Internationale Veröffentlichungsnummer: WO 2018/041290

(56) Entgegenhaltungen:
- DE-A1-102008 015 582
- DE-A1-102013 108 604
- DE-A1-102014 210 636
- US-A- 1 428 308
- US-A1- 2006 236 839

## Beschreibung

Die Erfindung betrifft ein Aufrauwerkzeug und ein Verfahren zum Aufrauen einer zylindrischen Oberfläche einer Bohrung in einem insbesondere metallischen Werkstück, z.B. der Kolbenlauffläche einer Zylinderbohrung oder einer Zylinderbuchse in einem Verbrennungsmotor durch Erzeugen einer definierten Mikrostruktur aus einer Vielzahl von in einem axialen Abstand voneinander angeordneten umlaufenden Mikrorillen.

Es ist hinlänglich bekannt, dass tribologisch hoch beanspruchte Oberflächen von Bohrungen in metallischen Werkstücken, z. B. der Kolbenlaufflächen von Zylinderbohrungen oder der Zylinderbuchsen in einem Verbrennungsmotor, mit Hilfe spanlos oder spanabhebender Werkzeuge mechanisch aufgeraut werden, um eine gute Haftgrundlage für eine insbesondere durch thermisches Spritzen aufzutragende Oberflächenschicht zu erhalten.

So wird beispielsweise in der DE 10 2013 011 726 A1 ein Aufrauwerkzeug vorgeschlagen, das eine Vielzahl von (z.B. 5 bis 100) in einem axialen Abstand voneinander angeordneten, umfangsschneidenden Schneidwerkzeugen in Gestalt von Sägeblättern umfasst, die an einem Werkzeuggrundkörper befestigt sind. Zum Einbringen einer ersten Vielzahl von umlaufenden Rillen in die Wand einer Zylinderbohrung in einem Verbrennungsmotor wird das um seine Längsmittelachse drehende Aufrauwerkzeug zunächst entlang der Bohrungsachse in die Bohrung eingefahren und dann soweit radial nach außen in Richtung der zylindrischen Oberfläche bewegt, dass die Sägeblätter bis zu einer gewünschten Tiefe in die zylindrische Oberfläche einschneiden. Daraufhin wird das drehende Aufrauwerkzeug auf einer 360°-Kreisbahn um die Bohrungsachse bewegt, wodurch eine der Anzahl der Sägeblätter entsprechende Zahl von umlaufenden Rillen gleichzeitig in die zylindrische Oberfläche geschnitten werden. Weil die Anzahl der Sägeblätter geringer ist als die vorgesehene Anzahl der in der zylindrischen Oberfläche zu erzeugenden Rillen, wird das Aufrauwerkzeug, nachdem es radial nach innen zurückgestellt worden ist, anschließend um ein gewünschtes Maß entlang der Bohrungsachse verfahren, erneut radial nach außen und auf einer 360°-Kreisbahn um die Bohrungsachse bewegt, wodurch eine zweite Vielzahl von Rillen in die zylindrische Oberfläche eingebracht wird. Dies muss sooft wiederholt werden, bis die vorgesehene Anzahl von Rillen eingebracht worden sind.

Bei dem in der DE 10 2013 011 726 A1 vorgeschlagenen Aufrauwerkzeug kann je Sägeblatt in einer 360°-Zirkularbewegung nur eine umlaufende Rille in die zu bearbeitende zylindrische Oberfläche eingebracht werden. Um nach dem in der DE 10 2013 011 726 A1 vorgeschlagenen Verfahren in einer zylindrischen Oberfläche von vorgegebener Länge eine Mikrostruktur aus einer vorgegebenen Anzahl (größer als die Zahl der Sägeblätter) umlaufender Rillen einbringen zu können, sind mehrere Bearbeitungsgänge erforderlich, die jeweils aus einer Axialbewegung, einer Radialbewegung nach außen, einer 360°-Zirkularbewegung und einer Radialbewegung nach innen des Aufrauwerkzeugs bestehen. Die Durchführung mehrerer derartiger Bearbeitungsgänge ist jedoch zeitaufwändig und erfordert eine aufwändige Steuerung des Aufrauwerkzeugs, um definierte Mikrorillenstrukuren von reproduzierbarer Genauigkeit erzeugen zu können.

Alternativ dazu könnte in Erwägung gezogen werden, das Aufrauwerkzeug mit einer der Anzahl der in der zu bearbeitenden zylindrischen Oberfläche einzubringenden Mikrorillen entsprechenden Zahl von Sägeblättern zu bestücken, um die zylindrische Oberfläche in nur einem Bearbeitungsdurchgang bearbeiten zu können. Bei dem in der DE 10 2013 011 726 A1 vorgeschlagenen Aufrauwerkzeug entsprechen die Schnittbreite und das Querschnittsprofil der Schneidezähne jedes Sägeblatts der Rillenbreite bzw. dem Rillenquerschnitt der erzeugten Rille. Weil die zum Aufrauen üblichen Rillenbreiten im µ-Bereich, z.B. von 100 µm bis 200 µm, liegen, benötigen die Schneidzähne der Sägeblätter daher ein dementsprechend filigranes Schneidprofil. Weiter sind die Sägeblätter in einem der Stegbreite zwischen den Rillen entsprechenden Abstand voneinander anzuordnen. Bei den üblichen Stegbreiten, die ebenfalls im µ-Bereich liegen, z.B. bei 100 µm, wäre das Aufrauwerkzeug daher mit einer Vielzahl von ebenfalls filigran ausgeführten Sägeblättern zu bestücken, um eine zylindrische Oberfläche über deren gesamte Länge hinweg in einem Bearbeitungsgang bearbeiten zu können. Bei derart filigran ausgeführten Sägeblätter ist die Gefahr von Schwingungen infolge der bei der Werkstückbearbeitung an den Schneidzähne auftretenden Schnittkräften jedoch sehr groß. Das ist nicht nur ein Nachteil hinsichtlich der Standzeit der Sägeblätter bzw. des Aufrauwerkzeugs, sondern stellt auch die Reproduzierbarkeit der Genauigkeit einer definierten Mikrostruktur in Frage.

Hinzu kommt, dass der Aufbau bzw. die Montage eines Aufrauwerkzeugs mit einer hohen Anzahl filigraner Sägeblätter zeitaufwändig und anspruchsvoll ist, um bei der Montage eine Beschädigung der Sägeblätter zu vermeiden und die Sägeblätter auf dem Werkzeuggrundkörper so anzuordnen, dass Anordnungsfehler vermieden werden, die die Bearbeitungsgenauigkeit gefährden könnten.

Die Druckschrift DE 10 2014 210 636 A1 zeigt ein Aufrauwerkzeug gemäß dem Oberbegriff des Anspruchs 1. Die Druckschrift US 1 428 308 A zeigt ein Fräswerkzeug mit mehreren Scheibenfräsern, die jeweils mehrere Schneidelemente mit Schneidzähnen aufweisen.

Ausgehend von der DE 10 2014 210 636 A1 hat die Erfindung daher die Aufgabe, ein Aufrauwerkzeug zum Aufrauen einer zylindrischen Oberfläche einer Bohrung in einem insbesondere metallischen Werkstück, z.B. der Kolbenlauffläche einer Zylinderbohrung oder einer Zylinderbuchse in einem Verbrennungsmotor, durch Erzeugen einer definierten Mikrostruktur aus einer Vielzahl von in einem definierten axialen Abstand voneinander angeordneten umlaufenden Rillen zu schaffen, das sich durch eine hohe Schwingungssteifigkeit und Stabilität sowie eine hohe Montagefreundlichkeit und eine Produktivität auszeichnet.

Diese Aufgabe wird durch ein Aufrauwerkzeug mit den Merkmalen des Anspruchs 1 gelöst. Vorteilhafte Weiterbildungen und Ausführungsformen sind Gegenstand abhängiger Ansprüche. Die Erfindung betrifft auch ein Verfahren mit den Merkmalen des Anspruchs 20 zum Aufrauen einer zylindrischen Oberfläche einer Bohrung mittels eines derartigen Aufrauwerkzeugs.

Ein erfindungsgemäßes Aufrauwerkzeug hat einen um eine Längsmittel- bzw. Drehachse drehantreibbaren Werkzeuggrundkörper und eine Vielzahl von in einem definierten axialen Abstand voneinander am Werkzeuggrundkörper angeordneten umfangsschneidenden Schneidwerkzeugen mit gleichem Nenndurchmesser. Wie im Stand der Technik ist der Nenndurchmesser der Schneidwerkzeuge bzw. des Aufrauwerkzeugs kleiner als der Bohrungsdurchmesser der zu bearbeitenden zylindrischen Oberfläche. Im Unterschied zu dem eingangs diskutierten Stand der Technik sind bei dem erfindungsgemäßen Aufrauwerkzeug die umfangsschneidenden Schneidwerkzeuge aber jeweils von einem Scheibenfräser gebildet, der Schneidelemente mit einer Vielzahl von in einem axialen Abstand voneinander angeordneten Schneidzähnen aufweist. Jeder Scheibenfräser kann hierzu in an sich bekannter Weise eine Mittenausnehmung aufweisen, in der ein die Scheibenfräser tragender zapfenartiger Aufnahmeabschnitt des Werkzeuggrundkörpers aufgenommen ist. Jedes Schneidelement hat im Besonderen eine dem Profil der zu erzeugenden Mikrostruktur entsprechende filigrane Verzahnung aus einer Vielzahl von einzelnen, in einem axialen Abstand voneinander angeordneten Schneidzähnen. Jeder Scheibenfräser kann daher in einem Bearbeitungsgang, d.h. in einer 360°-Zirkularbewegung des Aufrauwerkzeugs, gleichzeitig eine der Anzahl der Schneidzähne des wenigstens einen Schneidelements entsprechende Anzahl kreisförmig umlaufender Mikrorillen in die zylindrische Oberfläche schneiden. Das durch die Schneidzähne definierte Schneidprofil jedes Schneidelements ist auf die zu erzeugende, gewünschte Mikrostruktur abgestimmt.

Um eine hohe Produktivität zu erhalten, weist jeder Scheibenfräser in Umfangsrichtung erfindungsgemäß eine Vielzahl von in gleichen Winkelabständen, d.h. mit gleicher Winkelteilung, voneinander angeordneten Schneidelementen auf. In einer bevorzugten Ausführungsform sind die Scheibenfräser jeweils achtschneidig ausgebildet, d.h. dass je Scheibenfräser acht Schneidelemente in gleichen Winkelabständen über den Umfang verteilt sind. Die Schneidzähne jedes Schneidelements eines Scheibenfräsers sind erfindungsgemäß in Umfangsrichtung fluchtend angeordnet, d.h. die Schneidzähne der Schneidelemente eines Scheibenfräsers sind axial gleich angeordnet bzw. die Schneidelemente eines Scheibenfräsers weisen das gleiche Schneidprofile auf. Durch die Anordnung einer Vielzahl gleicher Schneidelemente in der gleichen axialen Lage lässt sich die Schnittkraftbelastung je Schneidelement gering und die Bearbeitungsdauer zum Erzeugen einer definierten Mikrostruktur in einer zylindrischen Oberfläche kurz halten.

Jedes Schneidelement hat daher notwendig eine Schneidprofilbreite, die weitaus größer ist als die Breite jedes Sägeblatts des Aufrauwerkzeugs nach der DE 10 2013 011 726 A1. Dank der größeren Schneidprofilbreite jedes Schneidelements kann jeder Scheibenfräser und damit das Aufrauwerkzeug insgesamt mit einer höheren Schwingungssteifigkeit und Stabilität ausgeführt werden.

Des Weiteren gestaltet sich die Montage des Aufrauwerkzeugs aufgrund der geringeren Anzahl von Scheibenfräsern einfacher und hinsichtlich der Montagegenauigkeit als zuverlässiger. In der Summe lässt sich eine hinsichtlich Genauigkeit hohe Reproduzierbarkeit einer dem Schneidprofil der Schneidelemente entsprechenden Mikrorillenstrukur gewährleisten.

Jeder Scheibenfräser kann aus mehreren Komponenten, d.h. modular aufgebaut, oder einstückig, d.h. monolithisch, ausgebildet sein. Bei dem modularen Aufbau kann jeder Scheibenfräser aus einem Fräsergrundkörper mit der bereits erwähnten Mittenausnehmung und wenigstens einem am Fräsergrundkörper gehaltenen Schneidelement gebildet sein. Das wenigstens eine Schneidelement kann am Fräsergrundkörper austauschbar, z.B. durch Klemmen oder Verschrauben, oder dauerhaft, z.B. durch Löten, Kleben oder dergleichen, gehalten sein kann. Jedes Schneidelement kann aus einer Schneidplatte, einer Schneidleiste, einem Schneideinsatz oder einem vergleichbaren Schneidkörper, z.B. aus einem PKD (Polykristalliner Diamant)-Werkstoff, gebildet und entweder unmittelbar oder mittelbar, z.B. über eine Kassette, an der Fräsergrundkörper befestigt sein. Die austauschbare Befestigung des wenigstens einen Schneidelements am Fräsergrundkörper bietet die Möglichkeit, das betreffende Schneidelement bei Verschleiß oder zur Anpassung des Aufrauwerkzeugs an eine gewünschte Mikrostruktur in einfacher Weise auszutauschen. Die dauerhafte Befestigung des wenigstens einen Schneidelements am Fräsergrundkörper vereinfacht dagegen die Montage des Aufrauwerkzeugs. Sind die Scheibenfräser monolithisch ausgebildet, sind die Schneidelemente jeweils integrale Funktionsabschnitte des jeweiligen Scheibenfräsers. Auch dadurch wird eine einfache Montage des Aufrauwerkzeugs erreicht.

Um über die gesamte Bearbeitungslänge der zylindrischen Oberfläche eine gleichbleibende Oberflächenqualität und damit eine gleichbleibende Haftgrundlage für eine spätere Beschichtung zu erhalten, sind die Schneidzähne des wenigstens einen Schneidelements jedes Scheibenfräsers vorzugsweise in gleichen axialen Abständen, d.h. mit gleicher axialer Teilung, angeordnet und mit gleichen Zahnprofilen versehen. Gleich gestaltete Schneidelemente tragen zu einer einfachen Herstellung der Scheibenfräser bei, wodurch die Montage des Aufrauwerkzeugs vereinfacht und die Herstellkosten gering gehalten werden.

Des Weiteren können die in einem axialen Abstand voneinander angeordneten Schneidzähne jedes Schneidelements axial in einer Reihe, also parallel zur Drehachse angeordnet sein, so dass jeder Scheibenfräser quasi geradegenutet ausgebildet ist.

In einer bevorzugten Ausführungsform haben die Schneidzähne jeweils ein durch eine vorgegebene Länge und Höhe definiertes Rechteckprofil, wobei die vorgegebene Länge im Bereich von 200 bis 400 µm und die vorgegebene Höhe im Bereich von 60 bis 200 µm liegen können. Der axiale Abstand zwischen zwei aufeinander folgenden Zähnen kann im Bereich von 100 bis 200 µm liegen. Statt des Rechteckprofils oder zusätzlich zum Rechteckprofil können die Schneidzähne beispielsweise aber auch Rund-, Trapez- und/oder Schwalbenschwanzpropile oder dergleichen und Kombinationen dieser Profile aufweisen. Die Schneidzähne können des Weiteren symmetrische und/oder symmetrische Querschnittsprofile aufweisen oder kombinieren.

In einer bevorzugten Ausführungsform sind die Vielzahl von Scheibenfräser hinsichtlich der Zahl der Schneidelemente und der Konfiguration der Schneidelemente vorteilhaft gleich gestaltet, so dass sich mit der Vielzahl von Scheibenfräsern in einer 360°-Zirkularbewegung des Aufrauwerkzeugs über eine Länge, die der Länge Vielzahl von Scheibenfräsern entspricht, in eine zylindrische Oberfläche eine Mikrorillenstruktur einbringen lässt, die aus einer Vielzahl von in gleichen axialen Abständen angeordneten umlaufenden Mikrorillen gleicher Tiefe und Länge besteht.

Der Vielzahl von Scheibenfräsern kann ein weiterer Scheibenfräser vor- und/oder ein weiterer Scheibenfräser nachgeordnet sein, die sich in der Konfiguration der Schneidelemente von denen der Vielzahl von Scheibenfräsern unterscheiden können. Der vor- und/oder nachgeordnete Scheibenfräser können/kann zur Kennzeichnung von Anfang bzw. Ende der zu erzeugenden Mikrorillenstruktur beispielsweise eine größere Zahnlücke zwischen zwei Schneidzähnen aufweisen und dadurch bedingt beispielsweise ein breiteres Schneidprofil haben.

Um das Aufrauwerkzeug relativ flexibel an verschiedene Bearbeitungsbedingungen, im Besonderen die zu erzeugende Mikrostruktur, die Länge der zu bearbeitenden zylindrischen Oberfläche, oder dergleichen, anpassen zu können, sind die Scheibenfräser am Werkzeuggrundkörper vorzugsweise austauschbar festgelegt. Hierzu sind die Scheibenfräser in Dreh- und Axialrichtung zweckmäßig form- und/oder kraftschlüssig mit dem Werkzeuggrundkörper verbunden.

In einer technisch einfach realisierbaren und kostengünstigen Weise gelingt die Festlegung der Scheibenfräser am Werkzeuggrundkörper in Drehrichtung, d.h. zur Drehmomentmitnahme, wie bei einer Welle-Nabe-Verbindung durch einen zwischen den Scheibenfräsern und dem Werkzeuggrundkörper angeordneten Mitnehmer, beispielsweise einer Passfeder. Zweckmäßig sind dabei alle Scheibenfräser über einen gemeinsamen Mitnehmer am Werkzeuggrundkörper festgelegt. Die Verwendung eines gemeinsamen Mitnehmers ermöglicht eine hohe Drehmomentmitnahme zwischen dem Werkzeuggrundkörper und den Scheibenfräsern, erleichtert die Montage des Aufrauwerkzeugs und ermöglicht durch die axiale Verschiebbarkeit der Scheibenfräser auf dem Werkzeuggrundkörper in einfacher Weise eine Abstandseinstellung zwischen den Scheibenfräsern.

Der Mitnehmer kann werkzeuggrundkörperseitig in einer außenumfangsseitig offenen Längsnut an einem die Scheibenfräser tragenden Aufnahmeabschnitt des Werkzeuggrundkörpers aufgenommen sein. Auf der Seite der Scheibenfräser kann jeder Scheibenfräser entweder eine Längsnut oder aber wie bei einer Keilnabe eine Vielzahl von Längsnuten aufweisen, die jeweils am Innenumfang der Mittenausnehmung nach innen offen sind. Hat jeder Scheibenfräser genau eine Längsnut, ist die Drehlage jedes Scheibenfräsers am Werkzeuggrundkörper eindeutig festgelegt. Hat jeder Scheibenfräser eine Vielzahl von in definierten, vorteilhafterweise gleichen, Winkelabständen voneinander beabstandeten Längsnuten, kann jeder Scheibenfräser in einer der Vielzahl von Längsnuten entsprechenden Zahl von Drehlagen am Werkzeuggrundkörper festgelegt werden. Das bietet die Möglichkeit, die Scheibenfräser in der Weise anzuordnen, dass die wenigstens einen Schneidelemente der Scheibenfräser axial in Reihe oder aber entlang einer Schraubenlinie oder Wendel verlaufen. Insgesamt betrachtet lässt sich das Aufrauwerkzeug daher geradegenutet oder wendelgenutet ausführen. Durch die wendelförmige Anordnung der Schneidelemente lassen sich die Bearbeitungskräfte reduzieren und lässt sich eine hohe Laufruhe erzielen. Eine Vielzahl von Passfedernuten bietet also die Möglichkeit, die Scheibenfräser in unterschiedlichen Drehlagen am Werkzeuggrundkörper festzulegen.

Als eine Alternative zu der oben diskutierten Mitnehmerverbindung können die Scheibenfräser mit dem Werkzeuggrundkörper wie bei einer Keilwellen-Keilnaben-Verbindung oder einer Polygonnaben-Polygonwellen-Verbindung drehfest verbunden sein. Die Scheibenfräser können also jeweils eine Mittenausnehmung mit einem Keilnaben- oder Innenpolygonprofil aufweisen, während der Werkzeuggrundkörper an dem die Scheibenfräser tragenden Aufnahmeabschnitt ein Keilwellen- oder Au-βenpolygonprofil aufweist. Derartige formschlüssige Verbindungen der Scheibenfräser mit dem Werkzeuggrundkörper ermöglichen eine flexible Anpassung der Drehlagen der Scheibenfräser am Werkzeuggrundkörper, um einen für die jeweiligen Bearbeitungsbedingungen optimalen Verlauf der Schneideelemente bzw. Umfangsschneiden der Scheibenfräser zu erhalten. Beispielsweise können die Scheibenfräser am Werkzeuggrundkörper so festgelegt werden, dass die wenigstens einen Schneidelemente der Scheibenfräser axial in Reihe oder entlang einer Schraubenlinie oder Wendel verlaufen. Insgesamt betrachtet kann das Aufrauwerkzeug kann daher geradegenutet oder wendelgenutet ausgeführt sein.

Die oben diskutierten formschlüssigen Verbindungen ermöglichen darüber hinaus durch eine axiale Verschiebbarkeit der Scheibenfräser auf dem Werkzeuggrundkörper in einfacher Weise eine Abstandseinstellung zwischen den Scheibenfräsern.

In axialer Richtung sind die Scheibenfräser am Werkzeuggrundkörper vorzugsweise kraftschlüssig festgelegt. Das gelingt in einfacher Weise dadurch, dass die Scheibenfräser ggf. über zwischen den Scheibenfräsern liegende Abstandhalter, z.B. Abstandhülsen oder Abstandringe, zwischen einem werkzeuggrundkörperseitigen Axialanschlag und einer stirnseitig in den Werkzeuggrundkörper geschraubten Spannschraube eingespannt sind. Über die Abstandhalter kann der Abstand zwischen axial aufeinanderfolgenden Scheibenfräser idealerweise so eingestellt sein, dass die Scheibenfräser mit gleichen Abständen angeordnet sind.

Im Besonderen kann der Abstand zweier axial aufeinanderfolgend angeordneter Scheibenfräser so eingestellt sein, dass sich die mehrzahnigen Schneidprofile der Schneidelemente der beiden Scheibenfräser in Umfangs- oder Schnittrichtung gesehen um ein definiertes Maß überdecken, wenn die Schneidprofilbreiten der Schneidelemente der beiden Scheibenfräser jeweils größer sind als die Breiten der Fräsergrundkörper der beiden Schreibenfräser. D.h., dass sich die durch die Schneidelemente der beiden Scheibenfräser erzeugten Mikrostrukturen um das definierte Maß überdecken. Auf diese Weise kann an einer zylindrischen Oberfläche eine über eine gewünschte Bearbeitungslänge hinweg gleichbleibende Mikrostruktur erzeugt werden, in der sämtliche umlaufenden Mikrorillen axialen in gleichen Abständen angeordnet sind.

Um eine Überdeckung der Schneidprofile zweier axial aufeinanderfolgend angeordneter Schneidelemente zu ermöglichen, sind die beiden Scheibenfräser zweckmäßig in der Weise gegeneinander verdreht angeordnet, dass die Schneidelemente der beiden Scheibenfräser in Umfangs- oder Schnittrichtung gesehen nacheinander angeordnet sind und zeitlich versetzt in die zu bearbeitende zylindrische Oberfläche schneiden.

Ein erfindungsgemäßes Aufrauwerkzeug kann des Weiteren einen mit dem Werkzeuggrundkörper verbundenen Schaftabschnitt zum Verbinden des Aufrauwerkzeugs mit einer Trenn- oder Schnittstelle eines Werkzeugmaschinensystems aufweisen. In dieser Ausführungsform bildet das Aufrauwerkzeug einen Schaftfräser mit einem Werkzeuggrundkörper, der sich funktional in den Schaftabschnitt und den oben erwähnte Aufnahmeabschnitt unterteilen lässt, auf dem die Scheibenfräser angeordnet sind.

In einer bevorzugten Ausführungsform weist das erfindungsgemäße Aufrauwerkzeug des Weiteren ein innenliegendes Kühlschmiermittelversorgungssystem zum Versorgen der Schneidelemente mit Kühlschmiermittel auf.

Weist das Aufrauwerkzeug über eine axiale Länge größer-gleich der Länge der zu bearbeitenden zylindrischen Oberfläche hinweg eine Vielzahl von in einem axialen Abstand voneinander angeordneten Schneidelementen mit jeweils einer Vielzahl von in einem axialen Abstand voneinander angeordneten Schneidzähnen auf, lässt sich eine zylindrische Oberfläche in der Weise aufrauen, dass das außerhalb der zu bearbeitenden zylindrischen Oberfläche positionierte Aufrauwerkzeug entlang der Bohrungsachse bis in eine gewünschte Tiefe in die Bohrung eingefahren wird; dann das drehende Aufrauwerkzeug radial soweit nach außen bewegt wird, dass die Schneidzähne bis zu einer gewünschten Tiefe in die zylindrische Oberfläche einschneiden; daraufhin das Aufrauwerkzeugs auf einer 360°-Kreisbahn um die Bohrungsachse zirkuliert wird; anschließend das Aufrauwerkzeug wieder radial nach innen zurück bewegt wird; und schließlich das Aufrauwerkzeug entlang der Bohrungsachse wieder aus der Bohrung heraus gefahren wird. Im Unterschied zu dem eingangs diskutierten Aufrauwerkzeug kann mit Hilfe des erfindungsgemäßen Aufrauwerkzeugs eine zylindrische Oberfläche daher in einem Bearbeitungsgang aufgeraut werden.

Mit Hilfe der beigefügten Zeichnungen wird im Folgenden eine bevorzugte Ausführungsform eines erfindungsgemäßen Aufrauwerkzeugs beschrieben. In den Zeichnungen zeigt die
Fig. 1 eine Seitenansicht eines erfindungsgemäßen Aufrauwerkzeugs;
Fig. 2 eine Frontansicht des erfindungsgemäßen Aufrauwerkzeugs;
Fig. 3 eine perspektivische Explosionsansicht des erfindungsgemäßen Aufrauwerkzeugs;
Fig. 4 eine in Fig. 1 eingekreiste Einzelheit H in einem größeren Maßstab;
Fig. 5 eine in Fig. 1 eingekreiste Einzelheit J in einem größeren Maßstab;
Fig. 6 eine in Fig. 1 eingekreiste Einzelheit G in einem größeren Maßstab;
Fig. 7 eine in Fig. 1 eingekreiste Einzelheit K in einem größeren Maßstab;

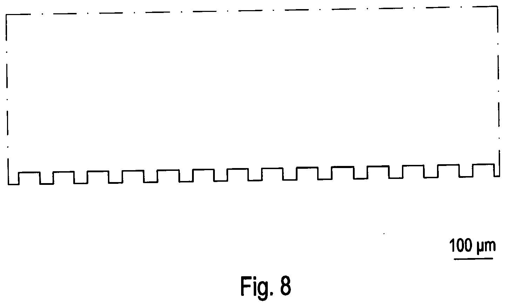

Fig. 8 das Schneidprofil einer mittels des erfindungsgemäßen Aufrauwerkzeugs in eine zylindrische Oberfläche eingebrachten Mikrorillenstrukur.

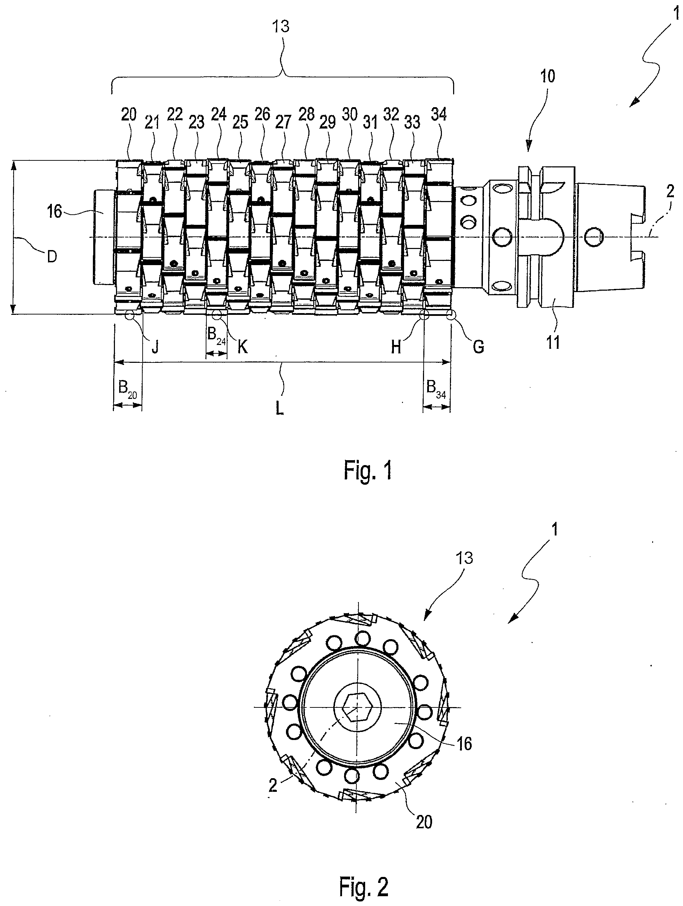

Im Folgenden wird mit Hilfe der der Fig. 1 bis 6 eine bevorzugte Ausführungsform eines erfindungsgemäßen Aufrauwerkzeugs näher beschrieben. Das als ein Zirkularfräswerkzeug ausgeführte Aufrauwerkzeug ist dafür konzipiert, in einer zylindrische Oberfläche einer Bohrung in einem insbesondere metallischen Werkstück, z.B. der Kolbenlauffläche einer Zylinderbohrung oder einer Zylinderbuchse in einem Verbrennungsmotor, mechanisch aufzurauen, indem in die Oberfläche eine definierte Mikrostruktur aus einer Vielzahl von in einem axialen Abstand voneinander angeordneten umlaufenden Mikrorillen eingebracht wird, um eine gute Haftgrundlage für eine insbesondere durch thermisches Spritzen aufzutragende Oberflächenschicht zu erhalten.

Das Aufrauwerkzeug 1 hat zu diesem Zweck einen in Figuren gezeigten modularen Aufbau, der einen um eine Längsmittel- bzw. Drehachse 2 drehantreibbaren Werkzeuggrundkörper 10 und eine Vielzahl, in der gezeigten Ausführungsform 15, von in einem definierten axialen Abstand voneinander am Werkzeuggrundkörper angeordneten umfangsschneidenden Schneidwerkzeugen 20 bis 34 aufweist.

Der Werkzeuggrundkörper 10 kann funktional in einen Schaftabschnitt 11 und einen Aufnahmeabschnitt 12 unterteilt werden. Über den Schaftabschnitt 11 kann das Aufrauwerkzeug 1 mit einer Trenn- oder Schnittstelle eines (nicht gezeigten) Werkzeugmaschinensystems verbunden werden. In der gezeigten Ausführungsform weist der Schaftabschnitt 11 hierzu einen dem Fachmann bekannten Hohlschaftkegel (HSK) auf. In der gezeigten Ausführungsform, in der der Grundkörper 10 über einen Schaftabschnitt 11 verfügt, bildet das Aufrauwerkzeug 1 daher ein Schaftfräswerkzeug. Der Aufnahmeabschnitt 12, der eine zapfenartige Verlängerung des Grundkörpers 10 bildet, trägt die Vielzahl von Schneidwerkzeugen 20 bis 34. Die Schneidwerkzeuge 20 bis 34 haben alle den gleichen Nenndurchmesser D, z.B. 70 mm, und bilden einen Schneidteil 13 des Aufrauwerkzeugs 1. Der Nenndurchmesser D des Schneidteils 13 des Aufrauwerkzeugs 1, der eine Länge L, z.B. 154 mm hat, ist kleiner als der Innendurchmesser der (nicht gezeigten) zu bearbeitenden zylindrischen Oberfläche. In der gezeigten Ausführungsform bildet das Aufrauwerkzeug 1 daher ein Schaftfräswerkzeug mit einem Werkzeuggrundkörper 10, der sich funktional in den Schaftabschnitt 11 und den Aufnahmeabschnitt 12 unterteilen lässt, auf dem die Schneidwerkzeuge 20 bis 34 angeordnet sind.

Bei dem erfindungsgemäßen Aufrauwerkzeug 1 sind die umfangsschneidenden Schneidwerkzeuge 20 bis 34 jeweils von einem Scheibenfräser gebildet, der in der gezeigten Ausführungsform jeweils aus mehreren Komponenten zusammengesetzt ist. Jeder Scheibenfräser 20 bis 34 weist im Besonderen einen scheibenförmigen Fräsergrundkörper 20a bis 34a und eine Vielzahl von, in der gezeigten Ausführungsform acht, umfangsschneidenden Schneidelementen 20b bis 34b auf. Jeder Fräsergrundkörper 20a bis 34 hat eine Mittenausnehmung 20c bis 34c, die den zapfenartigen Aufnahmeabschnitt 12 des Werkzeuggrundkörpers 10 mit einer definierten Spielpassung aufnimmt, und an seinem Außenumfang eine der Anzahl von Schneidelementen entsprechende Anzahl von Aufnahmetaschen 20f bis 34f, die in Schnitt- oder Umfangsrichtung des jeweiligen Scheibenfräsers 20 bis 34 in gleichen Winkelabständen, d.h. mit gleicher Winkelteilung, voneinander angeordnet sind und jeweils eines der Schneidelemente 20b bis 34b aufnehmen.

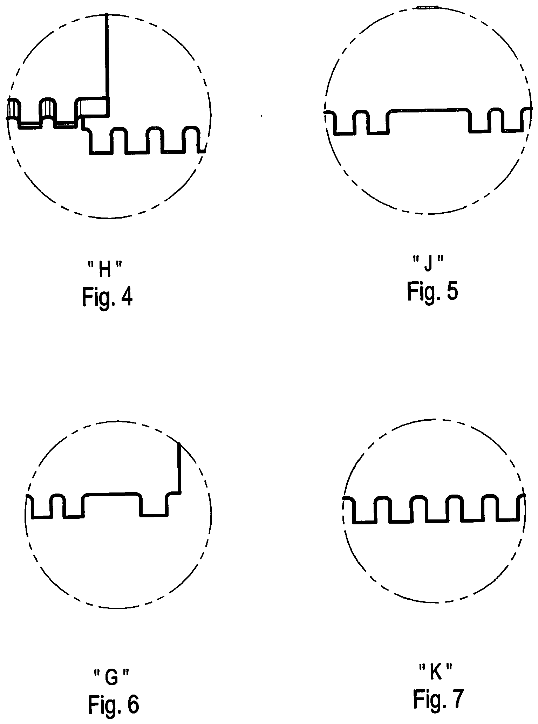

Jedes Schneidelement 20b bis 34b ist aus einem PKD (Polykristalliner Diamant)-Werkstoff gebildet und in der jeweiligen Aufnahmetasche 20f bis 34f durch Löten an dem jeweiligen Fräsergrundkörper 20a bis 34a befestigt. Jedes Schneidelement 20b bis 34b hat im Besonderen eine dem Profil der zu erzeugenden Mikrorillenstruktur entsprechende filigrane Verzahnung aus einer Vielzahl einzelner, in einem axialen Abstand voneinander angeordneter Schneidzähne (vgl. hierzu Fig. 4 bis Fig. 7). Das durch die Schneidzähne bestimmte mehrzahnige Schneidprofil jedes Schneidelements 20b bis 34b ist auf die zu erzeugende, gewünschte Mikrostruktur abgestimmt. In der gezeigten Ausführungsform sind die Schneidzähne der Schneidelemente 21b bis 33b des zweiten bis vierzehnten Scheibenfräsers 21 bis 33 in gleichen axialen Abständen von ca. 170 µm, d.h. mit gleicher axialer Teilung, angeordnet und mit gleichen rechteckigen Zahnprofilen versehen. In der gezeigten Ausführungsform haben die Schneidzähne der Schneidelemente 21b bis 33b des zweiten bis vierzehnten Scheibenfräsers 21 bis 33 des Weiteren jeweils eine Länge von ca. 280 µm und eine Höhe im Bereich von ca. 147 µm. Dieses Schneidprofil ist aber nicht zwingend, und kann daher variieren.

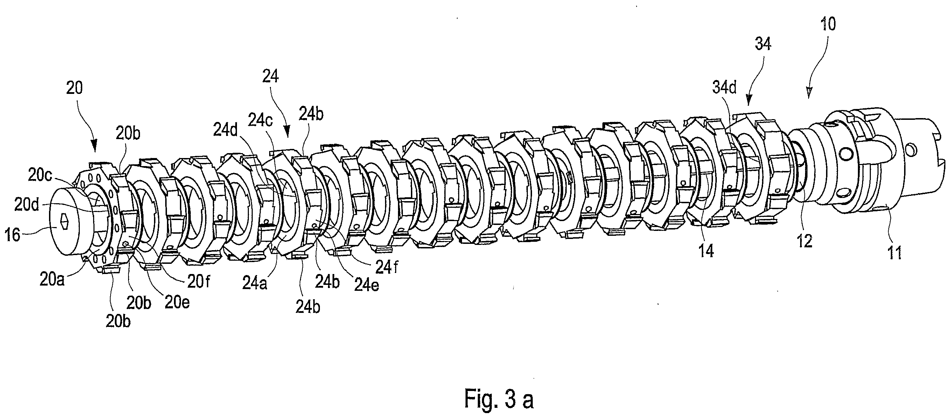

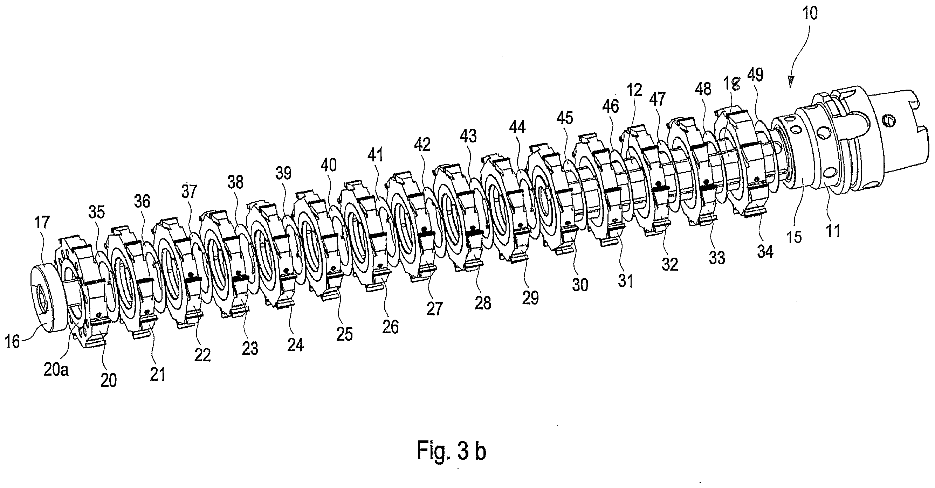

Der zweite bis vierzehnte Scheibenfräser 21 bis 33 bildet daher eine Vielzahl von mit gleichen Schneidelementen bestückten Scheibenfräser, die axial zwischen dem ersten und fünfzehnten Scheibenfräser 20, 34 eingespannt sind. Abgesehen davon, dass die Schneidelemente 20b, 34b des ersten und fünfzehnten Scheibenfräsers 20, 34 jeweils im Wesentlichen mittig eine größere Zahnlücke von ca. 1250 µm am ersten Scheibenfräser 20 und ca.900 µm am fünfzehnten Scheibenfräser 34 (vgl. Fig. 4 und Fig. 6) haben, sind auch die Schneidzähne der Schneidelemente 20b, 34b des ersten und fünfzehnten Scheibenfräsers 20, 34 in den gleichen axialen Abständen, d.h. mit gleicher axialer Teilung, angeordnet und haben die gleichen rechteckigen Zahnprofile wie die Schneidzähne des zweiten bis vierzehnten Scheibenfräsers 21 bis 33. Aufgrund der größeren Zahnlücken haben der erste Scheibenfräser 20 und der fünfzehnte Scheibenfräser 34, wie es in Fig. 1 und 3 gezeigt ist, jeweils eine größere Schneidprofilbreite B₂₀, B₃₄ als der zweite bis dreizehnte Scheibenfräser (vgl. z.B. B₂₄ in FIG. 1).

Des Weiteren sind die in einem axialen Abstand voneinander angeordneten Schneidzähne aller Schneidelemente 20b bis 34b axial in einer Reihe, also parallel zur Drehachse 2 angeordnet. Jeder Scheibenfräser 20 bis 34 ist damit geradegenutet ausgebildet. Die in Umfangsrichtung aufeinanderfolgenden Schneidelemente 20b bis 34b eines Scheibenfräsers weisen das gleiche Schneidprofil auf. Des Weiteren sind die Schneidzähne der Schneidelemente 20b bis 34b eines jeden Scheibenfräsers 20 bis 34 in Umfangsrichtung fluchtend angeordnet. Jeder Scheibenfräser 20 bis 34 kann daher eine der Zahl von Schneidzähnen eines jeden Schneidelements 20b bis 34b entsprechend Zahl von Mikrorillen, z.B. 21, schneiden. Die Fig. 1 und 3 lassen darüber hinaus erkennen, dass die Schneidprofilbreite jedes Schneidelements 20b bis 34b geringfügig größer ist als die (maximale) Breite des scheibenartigen Fräsergrundkörpers 20a bis 34a des jeweiligen Schreibenfräsers 20 bis 34. Jedes Schneidelement 20b bis 34b ragt daher um ein definiertes Maß axial über den scheibenartigen Fräsergrundkörper 20a bis 34a des jeweiligen Scheibenfräsers 20 bis 34 hinaus.

Die Scheibenfräser 20 bis 34 sind am Werkzeuggrundkörper 10 zweckmäßig austauschbar festgelegt. Hierzu sind die auf dem Aufnahmeabschnitt 12 des Werkzeuggrundkörpers 10 mit einer definierten Spielpassung angeordneten Scheibenfräser 20 bis 34 in Dreh- und Axialrichtung form- bzw. kraftschlüssig mit dem Werkzeuggrundkörper 10 verbunden. Die Festlegung der Scheibenfräser 20 bis 34 am Werkzeuggrundkörper in Drehrichtung, d.h. zur Drehmomentmitnahme, ist wie bei einer Welle-Nabe-Verbindung durch einen zwischen den Scheibenfräsern 20 bis 34 und dem Werkzeuggrundkörper 10 angeordneten Mitnehmer in Form einer Passfeder 14 realisiert. Zweckmäßig sind dabei alle Scheibenfräser 20 bis 34 über eine gemeinsame Passfeder 14 am Werkzeuggrundkörper 10 festgelegt. Wie die Fig. 3b erkennen lässt, ist die Passfeder 14 werkzeuggrundkörperseitig in einer Längsnut 18an dem die Scheibenfräser 20 bis 34 tragenden Aufnahmeabschnitt 12 aufgenommen. Auf der Seite der Scheibenfräser weist jeder Scheibenfräser 20 bis 34 in der gezeigten Ausführungsform genau eine Längsnut 20d bis 34d am Innenumfang der Mittenausnehmung 20c bis 24c auf. Die Drehlage jedes Scheibenfräsers 20 bis 34 am Werkzeuggrundkörper 10 ist daher eindeutig festgelegt und zwar im Besonderen so, dass die Scheibenfräser 20 bis 34 am Werkzeuggrundkörper 10 in der Weise gegeneinander verdreht angeordnet sind, dass die Schneidelemente 20b bis 34b der Scheibenfräser 20 bis 34 entlang von Schraubenlinien oder Wendeln verlaufen. Die Schneidelemente 20b bis 34b zweier axial aufeinander folgend angeordneter Scheibenfräser sind daher in Umfangs- oder Schnittrichtung gesehen hintereinander angeordnet, so dass sie zeitlich versetzt in die zu bearbeitende zylindrische Oberfläche schneiden. Insgesamt betrachtet ist der Schneidteil 13 des Aufrauwerkzeugs 1 daher wendelgenutet ausgeführt.

In axialer Richtung sind die Scheibenfräser 20 bis 34 am Werkzeuggrundkörper 10 zweckmäßig kraftschlüssig festgelegt. Das gelingt bei der gezeigten Ausführungsform dadurch, dass die Scheibenfräser 20 bis 34 über zwischen den Scheibenfräsern angeordnete Abstandhalter 35 bis 49 in Form von Abstandringen zwischen einem werkzeuggrundkörperseitigen Axialanschlag 15 und einer stirnseitig in den Werkzeuggrundkörper 10 geschraubten Spannschraube 16 eingespannt sind. Die Spannschraube 16 ist, wie in FIG. 1, 3a und 3b gezeigt, als eine Kopfschraube ausgeführt, deren Kopf 17 gegen den Fräsergrundkörper 20a des ersten Scheibenfräsers 20 drückt. Die auf dem zapfenartigen Aufnahmeabschnitt 12 angeordneten Scheibenfräser 20 bis 34 sind daher in den durch die Abstandringe 35 bis 49 definierten axialen Abständen zwischen dem Werkzeuggrundkörper 10 und der Spannschraube 16 axial kraftschlüssig eingespannt. In Schnitt- oder Drehrichtung sind die Scheibenfräser 20 bis 34 durch die oben beschriebene Passfeder 14 am Grundkörper 10 formschlüssig und in der Drehlage eindeutig festgelegt.

Die Abstandringe 34 bis 49 stellen die Abstände zwischen den Scheibenfräsern 20 bis 34 in der gezeigten Ausführungsform so ein, dass die Scheibenfräser 20 bis 34 in gleichen Abständen angeordnet sind. Die Abstände sind im Besonderen so ausgelegt ist, dass sich die mehrzahnigen Schneidprofile der Schneidelemente 20b bis 34b zweier axial aufeinanderfolgend angeordneter Scheibenfräser 20 bis 34 in Umfangs- oder Schnittrichtung gesehen um ein definiertes Maß überdecken. D.h., dass sich die durch die Schneidelemente 20b bis 34b der beiden Scheibenfräser 20 bis 34 erzeugten Mikrostrukturen um das definierte Maß überdecken.

In der gezeigten Ausführungsform weist das Aufrauwerkzeug des Weiteren ein (in den Figuren nicht gezeigtes) innenliegendes Kühlschmiermittelversorgungssystem zum Versorgen der Schneidelemente 20b bis 34b mit Kühlschmiermittel auf. In Fig. 1 und Fig. 3 sind die in den Aufnahmetaschen 20f bis 34f liegenden Austrittsöffnungen 20e bis 34e des Kühlschmiermittelversorgungssystems zu sehen, über den Schneidelementen Kühlschmiermittel zugeführt wird.

In der gezeigten Ausführungsform hat der aus den Scheibenfräsern 20 bis 34 gebildete Schneidteil 13 des Aufrauwerkzeugs eine axiale Länge L, die wenigstens so groß ist wie die Länge der aufzurauenden zylindrischen Oberfläche.

Zum Aufrauen einer zylindrischen Oberfläche wird das Aufrauwerkzeug 1 erfindungsgemäß zunächst außerhalb der zu bearbeitenden zylindrischen Oberfläche so in Position gebracht, dass die Längsmittel- oder Drehachse 2 des Aufrauwerkzeugs 1 mit der Bohrungsachse fluchtet. Dann wird das drehende Aufrauwerkzeug 1 entlang der Bohrungsachse bis in eine gewünschte axiale Tiefe in die Bohrung ein- und anschließend radial soweit nach außen gefahren, bis die Schneidzähne bis zu einer gewünschten radialen Tiefe in die zylindrische Oberfläche einschneiden. Mit dem der gewünschten radialen Tiefe entsprechenden Radius wird das Aufrauwerkzeug 1 dann auf einer 360°-Kreisbahn um die Bohrungsachse bewegt. Nach erfolgter 360°-Zirkularbewegung wird das Aufrauwerkzeug wieder radial nach innen zurück und entlang der Bohrungsachse aus der Bohrung heraus gefahren.

Mit dem erfindungsgemäßen Aufrauwerkzeug kann daher in einem Bearbeitungsgang, d.h. in einer 360°-Zirkularbewegung, gleichzeitig eine Vielzahl kreisförmig umlaufender Mikrorillen in die zylindrische Oberfläche geschnitten werden. Das durch die Schneidzähne bestimmte Schneidprofil jedes Schneidelements ist auf die zu erzeugende, gewünschte Mikrostruktur abgestimmt.

Abweichend von der anhand der Figuren beschriebenen bevorzugten Ausführungsform kann das erfindungsgemäße Aufrauwerkzeug beispielsweise wie folgt abgewandelt werden.

Im Unterschied zu der gezeigten Ausführungsform kann die Zahl der Scheibenfräser größer oder kleiner als fünfzehn sein. Über die Zahl der Scheibenfräser lässt sich die Länge des Schneidteils des Aufrauwerkzeugs an die Länge der in einer 360°-Zirkularbewegung aufzurauenden zylindrischen Oberfläche anpassen.

Der Schneidteil kann aus Scheibenfräsern gebildet sein, die hinsichtlich der Zahl der Schneidelemente und des Schneidprofils der Schneidelemente gleich konfiguriert sind. Anders ausgedrückt heißt das, dass der erste und fünfzehnte Scheibenfräser 20, 34 der in den Figuren gezeigten Ausführungsform, die sich im Schneidprofil von dem zweiten bis vierzehnten Scheibenfräser 21 bis 33 unterscheiden, nicht notwendig sind.

Die Schneidprofilbreite jedes Schneidelements kann abweichend von der gezeigten Ausführungsform der Breite des Fräsergrundkörpers entsprechend oder auch kleiner sein.

Des Weiteren die Schneidzähne statt eines Rechteckprofils beispielsweise auch Rund-, Trapez- und/oder Schwalbenschwanzpropile oder dergleichen sowie beliebige Kombinationen der vorgenannten Profile aufweisen. Die Schneidzähne können des Weiteren symmetrische und/oder symmetrische Querschnittsprofile aufweisen oder kombinieren.

Der Werkstoff der Schneidelemente ist nicht auf einen PKD-Werkstoff beschränkt und umfasst alle für eine spanabtragende Bearbeitung gängigen Werkstoffe, z.B. Hartmetall oder dergleichen.

Des Weiteren können die Schneidelemente am Fräsergrundkörper auch austauschbar, z.B. durch Klemmen oder Verschrauben, gehalten sein kann. Des Weiteren können die Schneidelement aus Schneidplatten, Schneidleisten, Schneideinsätzen oder vergleichbaren Schneidkörpern gebildet sein und wie in der gezeigten Ausführungsform unmittelbar oder aber mittelbar, z.B. über eine Kassette, am Fräsergrundkörper befestigt sein.

Davon abweichend können die Scheibenfräser auch einstückig, d.h. monolithisch, ausgebildet sein.

Des Weiteren kann die Zahl der in gleichen Winkelabständen, d.h. mit gleicher Winkelteilung, voneinander angeordneten Schneidelementen von acht abweichen.

Des Weiteren können die in einem axialen Abstand voneinander angeordneten Schneidzähne jedes Schneidelements statt parallel zur Drehachse auch so in Dreh- oder Umfangsrichtung gegeneinander versetzt angeordnet sein, dass sich ein quasi wendelförmiger Verlauf ergibt.

Zur formschlüssigen Festlegung in Drehrichtung, d.h. zur Drehmomentmitnahme, können die Scheibenfräser nach der Art einer Keilnabe eine Vielzahl von Längsnuten aufweisen, die jeweils am Innenumfang der Mittenausnehmung nach innen offen sind. Dadurch lässt sich die Drehlage jedes Scheibenfräsers flexibel ändern, beispielsweise so, dass die Scheibenfräser in der Weise angeordnet werden, dass die Schneidelemente der Scheibenfräser axial in Reihen oder in Schraubenlinien bzw. Wendeln verlaufen. Insgesamt betrachtet lässt sich das Aufrauwerkzeug daher geradegenutet oder wendelgenutet ausführen.

Die formschlüssige Festlegung der Scheibenfräser am Werkzeuggrundkörper in Drehrichtung, d.h. zur Drehmomentmitnahme, kann statt der gezeigten Passfederverbindung nach der Art einer Keilwellen-Keilnaben-Verbindung oder einer Polygonnaben-Polygonwellen-Verbindung erfolgen. Die Scheibenfräser können also jeweils eine Mittenausnehmung mit einem Keilnaben- oder Innenpolygonprofil aufweisen, während der Werkzeuggrundkörper an dem die Scheibenfräser tragenden Aufnahmeabschnitt ein Keilwellen- oder Außenpolygonprofil aufweist.

Abweichend von der gezeigten Ausführungsform kann der Abstand zweier axial aufeinanderfolgend angeordneter Scheibenfräser so eingestellt werden, dass sich die mehrzahnigen Schneidprofile der Schneidelemente der beiden Scheibenfräser in Umfangs- oder Schnittrichtung gesehen nicht überdecken, sondern die sich durch die Schneidelemente der beiden Scheibenfräser erzeugten Mikrostrukturen axial bündig oder mit einem definierten Abschnitt aufeinander folgen.

Statt des gezeigten HSK-Schaftabschnitts kann das Aufrauwerkzeug einen SK (Steilkegel)-Schaftabschnitt oder dergleichen aufweisen. Darüber hinaus kann ein Schaftabschnitt fehlen und der dann aus dem zapfenartigen Aufnahmeabschnitt gebildete Grundkörper in anderer Weise auf- oder eingespannt sein.

Das innenliegende Kühlschmiermittelversorgungssystem zum Versorgen der Schneidelemente mit Kühlschmiermittel ist nicht zwingend notwendig.

## Patentansprüche

1. Aufrauwerkzeug (1) zum Aufrauen der zylindrischen Oberfläche einer Bohrung in einem Werkstück durch Erzeugen einer definierten Mikrostruktur aus einer Vielzahl von in einem axialen Abstand voneinander angeordneten umlaufenden Mikrorillen, mit:
einem um eine Drehachse (2) drehantreibbaren Werkzeuggrundkörper (10) und
einer Vielzahl von in einem definierten axialen Abstand voneinander am Werkzeuggrundkörper (10) angeordneten umfangsschneidenden Schneidwerkzeugen, **dadurch gekennzeichnet, dass**
die Schneidwerkzeuge jeweils aus einem Scheibenfräser (21 - 33) gebildet sind,
jeder Scheibenfräser (21 - 33) in Umfangsrichtung eine Vielzahl von in gleichen Winkelabständen voneinander angeordneten Schneidelementen (21b - 33b) aufweist,
jeder Scheibenfräser (21 - 33) Schneidelemente (21b - 33b) mit einer Vielzahl von in einem axialen Abstand voneinander angeordneten Schneidzähnen aufweist,
und
die Schneidzähne der Schneidelemente (21b - 33b) jedes Scheibenfräsers (21 - 33) in Umfangsrichtung fluchtend angeordnet sind.

2. Aufrauwerkzeug (1) nach einem der vorhergehenden Ansprüche, **dadurch gekennzeichnet, dass** die Schneidzähne jedes Schneidelements (21b - 33b) axial in Reihe angeordnet sind.

3. Aufrauwerkzeug (1) nach einem der vorhergehenden Anspruch, **dadurch gekennzeichnet, dass** jeder Schneidzahn ein durch eine vorgegebene Länge und Höhe definiertes Rechteckprofil hat.

4. Aufrauwerkzeug (1) nach Anspruch 3, **dadurch gekennzeichnet, dass**
die vorgegebene Länge im Bereich von 200 bis 400 µm und die vorgegebene Höhe im Bereich von 60 bis 200 µm liegt.

5. Aufrauwerkzeug (1) nach einem der vorhergehenden Ansprüche, **dadurch gekennzeichnet, dass**
der axiale Abstand zwischen zwei aufeinander folgenden Zähnen im Bereich von 100 bis 200 µm liegt.

6. Aufrauwerkzeug (1) nach einem der vorhergehenden Ansprüche, **dadurch gekennzeichnet, dass** die Scheibenfräser (21 - 33) am Werkzeuggrundkörper (10) austauschbar festgelegt sind.

7. Aufrauwerkzeug (1) nach einem der vorhergehenden Ansprüche, **dadurch gekennzeichnet, dass** die Scheibenfräser (21 - 33) form- und/oder kraftschlüssig mit dem Werkzeuggrundkörper (10) verbunden sind.

8. Aufrauwerkzeug (1) nach einem der vorhergehenden Ansprüche, **dadurch gekennzeichnet, dass** die Scheibenfräser (21 - 33) am Werkzeuggrundkörper (10) in Drehrichtung formschlüssig festgelegt sind.

9. Aufrauwerkzeug (1) nach Anspruch 8, **dadurch gekennzeichnet, dass** die Scheibenfräser (21 - 33) am Werkzeuggrundkörper (10) in Drehrichtung über eine Passfeder (14) festgelegt sind.

10. Aufrauwerkzeug (1) nach einem der vorhergehenden Ansprüche, **dadurch gekennzeichnet, dass** die Scheibenfräser (21 - 33) am Werkzeuggrundkörper (10) in Axialrichtung kraftschlüssig festgelegt sind.

11. Aufrauwerkzeug (1) nach Anspruch 10, **dadurch gekennzeichnet, dass** die Scheibenfräser (21 - 33) am Werkzeuggrundkörper (10) in Axialrichtung über eine Spannschraube (16) festgelegt sind.

12. Aufrauwerkzeug (1) nach einem der vorhergehenden Ansprüche, **dadurch gekennzeichnet, dass** der Abstand zwischen zwei axial aufeinanderfolgend angeordneten Scheibenfräsern (21 - 33) durch einen zwischen den Scheibenfräsern (21 - 33) angeordneten Abstandhalter definiert ist.

13. Aufrauwerkzeug (1) nach einem der vorhergehenden Ansprüche, **dadurch gekennzeichnet, dass** der Abstand zweier aufeinander folgender Scheibenfräser (21 - 33) so definiert ist, dass sich die Schneidprofile der Schneidelemente (21b - 33b) der beiden Scheibenfräser (21 - 33) in Umfangsrichtung um ein definiertes Maß überdecken.

14. Aufrauwerkzeug (1) nach einem der vorhergehenden Ansprüchen, **dadurch gekennzeichnet, dass** jeweils zwei axial aufeinander folgende Scheibenfräser (21 - 33) in der Weise um die Drehachse (2) gegeneinander verdreht sind, dass die Schneidelemente (21b - 33b) der beiden Scheibenfräser (21 - 33) in einem definierten Winkelabstand voneinander angeordnet sind.

15. Aufrauwerkzeug (1) nach Anspruch 14, **dadurch gekennzeichnet, dass** jeweils zwei axial aufeinander folgende Scheibenfräser (21 - 33) in der Weise um die Drehachse gegeneinander verdreht sind, dass die Schneidelemente (21b - 33b) wendelförmig angeordnet sind.

16. Aufrauwerkzeug (1) nach einem der vorhergehenden Ansprüche, **gekennzeichnet durch** einen den Werkzeuggrundkörper (10) axial verlängernden Schaftabschnitt (11) zum Verbinden des Aufrauwerkzeugs (1) mit einer Trenn- oder Schnittstelle eines Werkzeugmaschinensystems.

17. Aufrauwerkzeug (1) nach einem der vorhergehenden Ansprüche, **gekennzeichnet durch** ein innenliegendes Kühlschmiermittelversorgungssystem zum Versorgen der Schneidelemente (21b - 33b) mit Kühlschmiermittel.

18. Aufrauwerkzeug (1) nach einem der vorhergehenden Ansprüche, **dadurch gekennzeichnet, dass** der durch die Vielzahl von Scheibenfräsern (21 - 33) gebildete Schneidteil (12) des Aufrauwerkzeugs (1) eine Länge größer-gleich der Länge der zu bearbeitenden zylindrischen Oberfläche hat.

19. Aufrauwerkzeug (1) nach einem der vorhergehenden Ansprüche, **dadurch gekennzeichnet, dass** die Vielzahl von Scheibenfräser (21 - 33) axial zwischen zwei weiteren Scheibenfräsern (20, 34) angeordnet sind, die eine größere Schneidprofilbreite aufweisen als jeder der Vielzahl von Scheibenfräser (21 - 33).

20. Verfahren zum Aufrauen einer zylindrischen Oberfläche einer Bohrung in einem Werkstück durch Erzeugen einer definierten Mikrostruktur aus einer Vielzahl von in einem axialen Abstand voneinander angeordneten umlaufenden Mikrorillen, mittels eines Aufrauwerkzeugs (1) nach einem der vorhergehenden Ansprüche, das über eine axiale Länge größer-gleich der Länge der zu bearbeitenden zylindrischen Oberfläche hinweg eine Vielzahl von in einem axialen Abstand voneinander angeordneten Schneidelementen mit jeweils einer Vielzahl von in einem axialen Abstand voneinander angeordneten Schneidzähnen aufweist, **gekennzeichnet durch** folgende Reihe von Schritte:
Einfahren eines Aufrauwerkzeugs (1) entlang der Bohrungsachse in die Bohrung,
Bewegen des sich drehenden Aufrauwerkzeugs (1) in radialer Richtung soweit nach außen, dass die Schneidzähne der Schneidelemente (21b - 33b) des Aufrauwerkzeugs (1) bis zu einer definierten Tiefe in die zylindrische Oberfläche der Bohrung schneiden,
Zirkulieren des sich drehenden Aufrauwerkzeugs (1) auf einer 360°-Kreisbahn um die Bohrungsachse, und
Bewegen des Aufrauwerkzeugs (1) radial nach innen, und
Zurückfahren des Aufrauwerkzeugs (1) entlang der Bohrungsachse aus der der Bohrung heraus.

## Claims

1. A roughening tool (1) for roughening the cylindrical surface of a bore in a workpiece by producing a defined microstructure that is composed of a plurality of microgrooves extending circumferentially at an axial distance from one another, comprising
a tool base body (10), which can be driven so as to rotate about a rotational axis (2),
a plurality of circumferentially cutting cutting tools, which are arranged on the tool base body (10) at a defined axial distance from one another, **characterized in that**
the cutting tools are respectively formed by a side milling cutter (21 - 33), wherein each side milling cutter (21 - 33) comprises a plurality of cutting elements (21b - 33b), which are arranged at identical angular distances from one another in the circumferential direction,
each side milling cutter (21 - 33) comprises cutting elements (21b - 33b) with a plurality of cutting teeth that are arranged at an axial distance from one another, and
the cutting teeth of the cutting elements (21b - 33b) of each side milling cutter (21 - 33) are arranged in alignment in the circumferential direction.

2. The roughening tool (1) according to one of the preceding claims, **characterized in that** the cutting teeth of each cutting element (21b - 33b) are arranged axially in a row.

3. The roughening tool (1) according to one of the preceding claims, **characterized in that** each cutting tooth has a rectangular profile, which is defined by a predetermined length and height.

4. The roughening tool (1) according to claim 3, **characterized in that**
the predetermined length lies in the range between 200 and 400 µm and the predetermined height lies in the range between 60 and 200 µm.

5. The roughening tool (1) according to one of the preceding claims, **characterized in that**
the axial distance between two successive teeth lies in the range between 100 and 200 µm.

6. The roughening tool (1) according to one of the preceding claims, **characterized in that** the side milling cutters (21 - 33) are exchangeably fastened on the tool base body (10).

7. The roughening tool (1) according to one of the preceding claims, **characterized in that** the side milling cutters (21 - 33) are positively and/or non-positively connected to the tool base body (10).

8. The roughening tool (1) according to one of the preceding claims, **characterized in that** the side milling cutters (21 - 33) are positively fastened on the tool base body (10) in the rotating direction.

9. The roughening tool (1) according to claim 8, **characterized in that** the side milling cutters (21 - 33) are fastened on the tool base body (10) in the rotating direction by means of a feather key (14).

10. The roughening tool (1) according to one of the preceding claims, **characterized in that** the side milling cutters (21 - 33) are non-positively fastened on the tool base body (10) in the axial direction.

11. The roughening tool (1) according to claim 10, **characterized in that** the side milling cutters (21 - 33) are fastened on the tool base body (10) in the axial direction by means of a clamping screw (16).

12. The roughening tool (1) according to one of the preceding claims, **characterized in that** the distance between two axially successive side milling cutters (21 - 33) is defined by a spacer arranged between the side milling cutters (21 - 33).

13. The roughening tool (1) according to one of the preceding claims, **characterized in that** the distance between two successive side milling cutters (21 - 33) is defined in such a way that the cutting profiles of the cutting elements (21b - 33b) of the two side milling cutters (21 - 33) overlap by a defined dimension in the circumferential direction.

14. The roughening tool (1) according to one of the preceding claims, **characterized in that** two axially successive side milling cutters (21 - 33) respectively are rotated relative to one another about the rotational axis (2) in such a way that the cutting elements (21b - 33b) of the two side milling cutters (21 - 33) are arranged at a defined angular distance from one another.

15. The roughening tool (1) according to claim 14, **characterized in that** two axially successive side milling cutters (21 - 33) respectively are rotated relative to one another about the rotational axis in such a way that the cutting elements (21b - 33b) are arranged helically.

16. The roughening tool (1) according to one of the preceding claims, **characterized by** a shank section (11), which forms an axial extension of the tool base body (10) and serves for connecting the roughening tool (1) to a disconnection point or interface of a machine tool system.

17. The roughening tool (1) according to one of the preceding claims, **characterized by** an internal cooling lubricant supply system for supplying the cutting elements (21b - 33b) with cooling lubricant.

18. The roughening tool (1) according to one of the preceding claims, **characterized in that** the cutting section (12) of the roughening tool (1), which is formed by the plurality of side milling cutters (21 - 33), has a length that is greater than/equal to the length of the cylindrical surface to be machined.

19. The roughening tool (1) according to one of the preceding claims, **characterized in that** the plurality of side milling cutters (21 - 33) are axially arranged between two additional side milling cutters (20, 34), which have a greater cutting profile width than each of the plurality of side milling cutters (21 - 33).

20. A method for roughening a cylindrical surface of a bore in a workpiece by producing a defined microstructure that is composed of a plurality of microgrooves extending circumferentially at an axial distance from one another by means of a roughening tool (1) according to one of the preceding claims that comprises a plurality of cutting elements, which are arranged at an axial distance from one another and respectively comprise a plurality of cutting teeth arranged at an axial distance from one another, over an axial length that is greater than/equal to the length of the cylindrical surface to be machined, **characterized by** the following sequence of steps:
introducing a roughening tool (1) into the bore along the bore axis,
moving the rotating roughening tool (1) radially outward until the cutting teeth of the cutting elements (21b - 33b) of the roughening tool (1) cut into the cylindrical surface of the bore up to a defined depth,
circulating the rotating roughening tool (1) along a 360° orbit about the bore axis,
moving the roughening tool (1) radially inward, and
retracting the roughening tool (1) from the bore along the bore axis.

## Revendications

1. Outil de rugosification (1) pour la rugosification de la surface cylindrique d'un alésage dans une pièce à usiner par génération d'une microstructure définie à partir d'une pluralité de microrainures périphériques agencées à une distance axiale les unes des autres, avec :
un corps de base d'outil (10) entraînable en rotation autour d'un axe de rotation (2) et
une pluralité d'outils de coupe périphériques agencés à une distance axiale définie les uns des autres au niveau du corps de base d'outil (10), **caractérisé en ce que**
les outils de coupe sont formés respectivement d'une fraise disque (21-33), chaque fraise disque (21-33) présente dans le sens périphérique une pluralité d'éléments de coupe (21b-33b) agencés à distances angulaires identiques les uns des autres, chaque fraise disque (21-33) présente des éléments de coupe (21b-33b) avec une pluralité de dents de coupe agencées à une distance axiale les unes des autres, et
les dents de coupe des éléments de coupe (21b-33b) de chaque fraise disque (21-33) sont agencées en s'alignant dans le sens périphérique.

2. Outil de rugosification (1) selon l'une quelconque des revendications précédentes, **caractérisé en ce que** les dents de coupe de chaque élément de coupe (21b-33b) sont agencées axialement en série.

3. Outil de rugosification (1) selon l'une quelconque des revendications précédentes, **caractérisé en ce que** chaque dent de coupe présente un profil rectangulaire défini par une longueur et une hauteur prédéfinies.

4. Outil de rugosification (1) selon la revendication 3, **caractérisé en ce que**
la longueur prédéfinie se trouve dans la plage de 200 à 400 µm et la hauteur prédéfinie se trouve dans la plage de 60 à 200 µm.

5. Outil de rugosification (1) selon l'une quelconque des revendications précédentes, **caractérisé en ce que**
la distance axiale entre deux dents consécutives se trouve dans la plage de 100 à 200 µm.

6. Outil de rugosification (1) selon l'une quelconque des revendications précédentes, **caractérisé en ce que** les fraises disque (21-33) sont fixées de manière interchangeable au corps de base d'outil (10).

7. Outil de rugosification (1) selon l'une quelconque des revendications précédentes, **caractérisé en ce que** les fraises disque (21-33) sont reliées par complémentarité de formes et/ou à force au corps de base d'outil (10).

8. Outil de rugosification (1) selon l'une quelconque des revendications précédentes, **caractérisé en ce que** les fraises disque (21-33) sont fixées par complémentarité de formes au corps de base d'outil (10) dans le sens de rotation.

9. Outil de rugosification (1) selon la revendication 8, **caractérisé en ce que** les fraises disque (21-33) sont fixées au corps de base d'outil (10) par le biais d'un ressort d'ajustage (14) dans le sens de rotation.

10. Outil de rugosification (1) selon l'une quelconque des revendications précédentes, **caractérisé en ce que** les fraises disque (21-33) sont fixées au corps de base d'outil (10) à force dans le sens axial.

11. Outil de rugosification (1) selon la revendication 10, **caractérisé en ce que** les fraises disque (21-33) sont fixées au corps de base d'outil (10) dans le sens axial par le biais d'une vis de serrage (16).

12. Outil de rugosification (1) selon l'une quelconque des revendications précédentes, **caractérisé en ce que** la distance entre deux fraises disque (21-33) agencées axialement de manière consécutive est définie par un élément d'écartement agencé entre les fraises disque (21-33).

13. Outil de rugosification (1) selon l'une quelconque des revendications précédentes, **caractérisé en ce que** la distance entre deux fraises disque (21-33) consécutives est définie de sorte que les profils de coupe des éléments de coupe (21b-33b) des deux fraises disque (21-33) se recouvrent dans le sens périphérique d'une mesure définie.

14. Outil de rugosification (1) selon l'une quelconque des revendications précédentes, **caractérisé en ce que** respectivement deux fraises disque (21-33) consécutives axialement sont tournées autour de l'axe de rotation (2) l'une contre l'autre de telle manière que les éléments de coupe (21b-33b) des deux fraises disque (21-33) soient agencés dans une distance angulaire définie l'un par rapport à l'autre.

15. Outil de rugosification (1) selon la revendication 14, **caractérisé en ce que** respectivement deux fraises disque (21-33) consécutives axialement sont tournées autour de l'axe de rotation l'une contre l'autre de telle manière que les éléments de coupe (21b-33b) soient agencés en hélice.

16. Outil de rugosification (1) selon l'une quelconque des revendications précédentes, **caractérisé par** une section de tige (11) prolongeant axialement le corps de base d'outil (10) pour la liaison de l'outil de rugosification (1) avec un point de séparation ou de coupe d'un système de machine-outil.

17. Outil de rugosification (1) selon l'une quelconque des revendications précédentes, **caractérisé par** un système d'alimentation en lubrifiant de refroidissement intérieur pour l'alimentation des éléments de coupe (21b-33b) en lubrifiant de refroidissement.

18. Outil de rugosification (1) selon l'une quelconque des revendications précédentes, **caractérisé en ce que** la partie de coupe (12) formée par la pluralité de fraises disque (21-33) de l'outil de rugosification (1) présente une longueur de même taille que la longueur de la surface cylindrique à usiner.

19. Outil de rugosification (1) selon l'une quelconque des revendications précédentes, **caractérisé en ce que** la pluralité de fraises disque (21-33) est agencée axialement entre deux autres fraises disque (20, 34) qui présentent une largeur de profil de coupe supérieure à chacune de la pluralité de fraises disque (21-33).

20. Procédé de rugosification d'une surface cylindrique d'un alésage dans une pièce à usiner par génération d'une microstructure définie à partir d'une pluralité de microrainures périphériques agencées à une distance axiale les unes des autres, au moyen d'un outil de rugosification (1) selon l'une quelconque des revendications précédentes qui présente au-delà d'une longueur axiale de même taille que la longueur de la surface cylindrique à usiner une pluralité d'éléments de coupe agencés à une distance axiale les uns des autres avec respectivement une pluralité de dents de coupe agencées à une distance axiale les unes des autres, **caractérisé par** la suite suivante d'étapes :
rentrer un outil de de rugosification (1) le long de l'axe d'alésage dans l'alésage,
déplacer l'outil de rugosification (1) se tournant dans le sens radial d'autant vers l'extérieur que les dents de coupe des éléments de coupe (21b-33b) de l'outil de rugosification (1) coupent jusqu'à une profondeur définie dans la surface cylindrique de l'alésage,
faire circuler l'outil de rugosification (1) se tournant sur une trajectoire circulaire de 360° autour de l'axe d'alésage, et
déplacer l'outil de rugosification (1) radialement vers l'intérieur, et
ramener l'outil de rugosification (1) le long de l'axe d'alésage hors de l'alésage.
